## Europäisches Patentamt
### European Patent Office
### Office européen des brevets

(11) Veröffentlichungsnummer: **0 327 651**
**A1**

# EUROPÄISCHE PATENTANMELDUNG

(21) Anmeldenummer: 88101740.4

(22) Anmeldetag: 06.02.88

(51) Int. Cl.⁴: **A01K 9/00**

(43) Veröffentlichungstag der Anmeldung:
**16.08.89** Patentblatt **89/33**

(84) Benannte Vertragsstaaten:
**AT BE CH DE FR GB IT LI LU NL**

(71) Anmelder: **Hinterkopf, Adolf**
**Ringstrasse 17**
**D-7900 Ulm/Lehr(DE)**

(72) Erfinder: **Hinterkopf, Adolf**
**Ringstrasse 17**
**D-7900 Ulm/Lehr(DE)**

(74) Vertreter: **Patentanwälte Phys. Bartels**
**Dipl.-Ing. Fink Dr.-Ing. Held**
**Lange Strasse 51**
**D-7000 Stuttgart 1(DE)**

(54) **Schwenkvorrichtung für einen Eimer.**

(57) Eine Schwenkvorrichtung für einen im Bereich seines oberen Randes an einer Haltevorrichtung (4) schwenkbar aufhängbaren Eimer (1), der zum Tränken von Tieren, insbesondere von Kälbern oder dgl., einen von seiner Wand nach außen abstehenden Saugzapfen aufweist, weist eine unterhalb der Haltevorrichtung (4) zumindest annähernd parallel zur Schwenkachse des Eimers (1) drehbar zu lagernde Welle auf, mit einer Handhabe (13, 14) zum Drehen der Welle und einem von der Welle abstehenden Abdrückglied (15). Letzteres liegt in seiner wirksamen Stellung an der Wand (2) des Eimers (1) an und hat eine Erstreckung in radialer Richtung der Welle, welche zumindest beim größten erreichbaren Schwenkwinkel des Eimers (1) den Saugzapfen (8) außerhalb des von dem zu tränkenden Tier erreichbaren Bereiches hält.

Fig.1

## Schwenkvorrichtung für einen Eimer

Die Erfindung betrifft eine Schwenkvorrichtung für einen im Bereich seines oberen Randes an einer Haltevorrichtung schwenkbar aufhängbaren Eimer, der zum Tränken von Tieren, insbesondere Kälbern oder dgl., einen von seiner Wand nach außen abstehenden Saugzapfen aufweist.

Die bekannten Eimer mit einem Saugzapfen zum Tränken von Tieren sind mit dem Nachteil behaftet, daß sie, nachdem das Tier getränkt worden ist, von Hand in eine Position gebracht werden müssen in welcher das Tier den Saugzapfen nicht mehr erreichen kann. Wenn nämlich nach dem Tränken der Saugzapfen für das Tier noch erreichbar wäre, würde das Tier den Saugzapfen in kurzer Zeit unbrauchbar machen. Mit diesem Nachteil sind auch diejenigen Eimer der in Rede stehenden Art behaftet die an einer Haltevorrichtung schwenkbar aufhängbar sind, da auch sie von Hand aus der hängenden Lage. in welcher das Tier den Saugzapfen erreichen kann, in eine umgestürzte Lage geschwenkt werden müssen. Hierzu benötigt die Bedienungsperson beide Hände weshalb diese täglich mehrmals auszuführende Arbeit aufwendig ist.

Der Erfindung liegt daher die Aufgabe zugrunde, eine Schwenkvorrichtung für Eimer der eingangs genannten Art zu schaffen, welche den Aufwand für das Schwenken des Eimers von der Lage, in welcher das Tier den Saugzapfen erreicht, in die Lage, in welcher der Saugzapfen nicht erreichbar ist, und umgekehrt reduziert und kostengünstig ist. Diese Aufgabe löst eine Schwenkvorrichtung mit den Merkmalen des Anspruches 1.

Um den Eimer von der einen in die andere Lage zu schwenken, braucht nur die welle mit Hilfe der Handhabe entsprechend gedreht zu werden, was bequem und rasch mit einer Hand ausgeführt werden kann. Da außer der welle, der Handhabe und dem Abdrückglied keine weiteren Bauteile erforderlich sind und die Montage ebenfalls problemlos ist, weil die Welle unterhalb der Haltevorrichtung an der diese tragenden Wand oder dgl. mit Hilfe einfacher Lagerelemente drehbar gelagert werden kann, ist der Aufwand für die Schwenkvorrichtung minimal.

Dies gilt vor allem dann, wenn das Abdrückglied aus einem Abschnitt einer die Welle bildenden Stange steht, also einstückig mit der Welle ausgebildet ist. Ebenso ist vorteilhafterweise auch die Handhabe einstückig mit der Welle ausgebildet, nämlich durch einen Endabschnitt derselben, welcher im Winkel von der Welle zur Bildung eines Schwenkhebels absteht.

Bei einer bevorzugten Ausführungsform hat das Abdrückglied die Form eines Bügels, dessen Jochteil an der wand des Eimers anlegbar ist und dessen beide Schenkel sich an die gegeneinander weisenden sowie miteinander fluchtenden Abschnitte der Welle anschließen. Ein solcher Bügel läßt sich ohne Schwierigkeiten aus dem auch die Welle bildenden Stab biegen. Ferner kann man durch eine Anpassung der Form des Jochteils an das Eimerprofil eine Anlage auf der gesamten Länge des Jochteils an der Eimerwand erreichen. Ein weiterer Vorteil besteht darin, daß der Jochteil Anschlag an der den Saugzapfen tragenden Armatur findet und deshalb die Welle keine zusätzliche Begrenzung ihres Schwenkbereiches benötigt.

Vorzugsweise hat der Bügel eine Ausbildung gemäß den Ansprüchen 4 und 5, wobei die Ausbildung gemäß Anspruch 5 insofern besonders vorteilhaft ist, als bei ihr die Welle verhindert, daß das Tier den Saugzapfen erfaßt und den Eimer nach oben schiebt wodurch dieser aus seiner Lagerung in der Haltevorrichtung herausspringen könnte. Kann jedoch der Saugzapfen oder die ihn tragende Armatur nicht in die Lücke zwischen den beiden Abschnitten der Welle eintreten, dann lassen sich der Saugzapfen und die Armaturen und damit auch der Eimer nicht nach oben verschieben.

Im folgenden ist die Erfindung anhand eines in der Zeichnung dargestellten Ausführungsbeispiels im einzelnen erläutert. Es zeigen

Fig. 1 eine Seitenansicht des Ausführungsbeispiels in den beiden Endlagen des Schwenkbereiches,

Fig. 2 eine Ansicht des Ausführungsbeispiels.

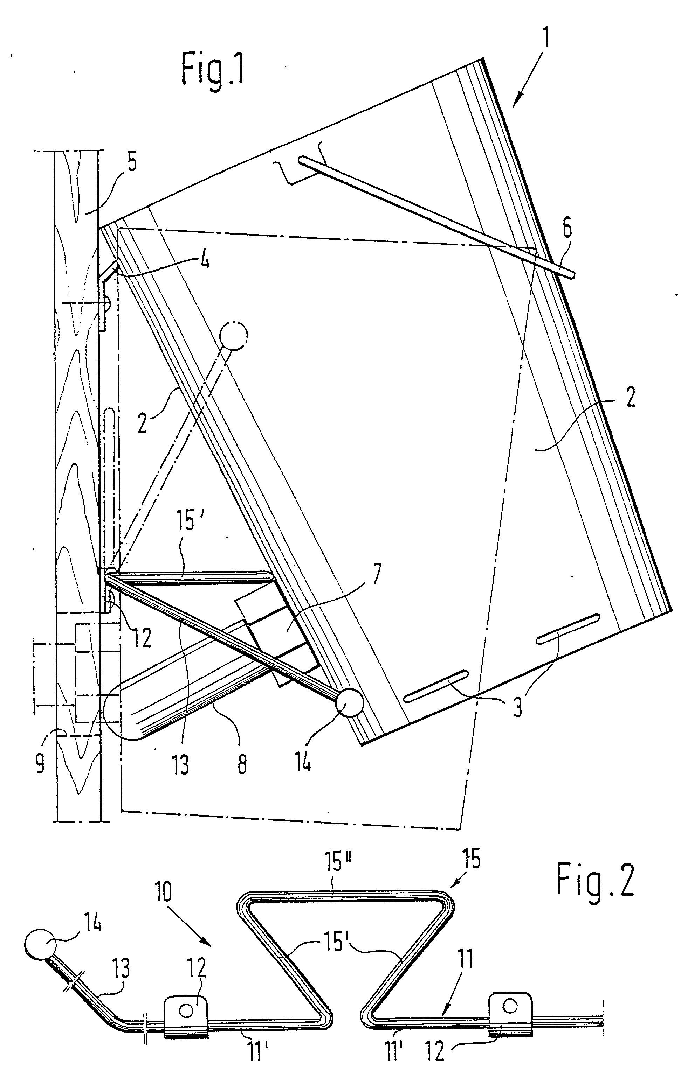

Ein Eimer 1 zum Tränken von Tieren, insbesondere Kälbern, der im Ausführungsbeispiel eine quadratische Ouerschnittsform mit abgerundeten Längskanten hat, weist im Bereich der oberen Randzone wenigstens eines seiner vier ebenen Wandteile 2 zwei im Abstand nebeneinander angeordnete Schlitze auf, welche wie in Fig. 1 sichtbaren, in der unteren Randzone der Wand vorgesehenen Schlitze 3 ausgebildet sind. Diese Schlitze sind für den Eingriff von zwei doppelt abgekröpften, aus Blech gebogenen Zungen 4 vorgesehen, welche im Bereich ihres unteren Abschnittes an eine Trennwand 5 angeschraubt sind, hinter welcher sich das zu tränkende Tier befindet. Die beiden Zungen 4 erstrecken sich von ihrer Befestigungsstelle aus nach oben und bilden eine Haltevorrichtung für den Eimer 1 sowie eine Schwenklagerung, die es ermöglicht, den Eimer 1 um eine horizontale Achse zu schwenken, wie dies Fig. 1 zeigt. Außer einem im Bereich des oberen Randes des Eimers schwenkbar gelagerten Tragbügel 8 weist der Eimer in dem die Schlitze aufweisenden Wandteil 2 etwas oberhalb seines Bodens einen Durchbruch für eine Armatur 7 auf, welche einen nach außen vom Eimer abstehenden Saugzapfen 8 trägt. Die Armatur 7 greift, wie in Fig. 1 mit strichpunktierten Linien dargestellt ist, in eine Öffnung 9 der Wand 5 ein, wenn der Eimer 1 sich in der Tränklage befindet, in welcher der der Wand 5 zugekehrte Wandteil 2 parallel zur Wand liegt. Der Saugzapfen 9 steht dann über die dem Eimer 1 abgekehrte Seite der Trennwand 5 über und ist für das zu tränkende Tier gut erreichbar.

Unterhalb der beiden Zungen 4, jedoch etwas oberhalb der Öffnung 9, ist eine als Ganzes mit 10 bezeichnete Schwenkvorrichtung angeordnet, die eine aus einem zylindrischen Stab gebildete Welle li aufweist, welche aus zwei miteinander fluchtenden Abschnitten 11' besteht. Diese Welle ist etwas oberhalb der Öffnung 9 parallel zu der durch die Zungen 4 gebildeten Schwenkachse für den Eimer 1 in zwei Lagerschellen 12 drehbar gelagert die aus Blech gebogen und an die Trennwand 5 angeschraubt sind, und zwar derart, daß jeder der beiden Abschnitte 11' in einer der Lagerschellen 12 gelagert ist. An dasjenige Ende des einen Abschnittes 11' der Welle 11, das dem anderen Abschnitt 11' abgekehrt ist, schließt sich ein Schwenkarm 13 an, der an seinem freien Ende einen Kugelknopf 14 trägt und zusammen mit diesem eine Handhabe zur Schwenkung der Welle 11 bildet. Der aus einem Endabschnitt des die Welle 11 bildenden Stabes geformte Schwenkarm 13 ist gegenüber dem anschließenden Abschnitt 11' der Welle 11 abgewinkelt und zwar, wie Fig. 1 zeigt, derart, daß er seitlich am Eimer 1 vorbei von der Trennwand 5 absteht und zwar auch in der Tränklage des Eimers 1. Sofern der Schwenkbereich der Welle 11 etwa 90° beträgt, wie dies im Ausführungsbeispiel der Fall ist, erstreckt sich der Schwenkarm 13 in der Tränkstellung des Eimers 1 unter einem spitzen Winkel von der Welle 11 aus nach vorne und oben, wobei dieser Winkel so gewählt ist, daß in der mit strichpunktierter Linie dargestellten Tränklage der Abstand des Kugelknopfes 14 von der Trennwand 5 ausreichend groß ist, um den Kugelknopf 14 bequem mit der Hand erfassen zu können.

Die beiden gegeneinander weisenden Enden der Abschnitte 11' der Welle 11 haben einen Abstand voneinander, der kleiner ist als der Durchmesser des Saugzapfens 8. Der Saugzapfen 8 und die Armatur 7 können deshalb nicht zwischen den beiden Abschnitten 11' hindurchtreten, wodurch verhindert wird, daß das zu tränkende Tier den Saugzapfen 8 und mit diesem zusammen den Eimer 1 nach oben schiebt und ihn aus den Zungen 4 aushängt.

An die gegeneinander weisenden Enden der Abschnitte 11' der Welle 1-1 schließen sich zwei geradlinige Schenkel 15' eines aus dem die Welle 11 bildenden Stabes geformten Bügels 15 an. Der Abstand der Schenkel 15' nimmt von dem an die Abschnitte 11' anschließenden Ende gegen das in einen Jochteil 15" übergehende Ende hin gleichmäßig zu. Der Jochteil 15" ist ebenfalls geradlinig ausgebildet und liegt parallel zur Welle 11, wie Fig. 2 zeigt. Im Ausführungsbeispiel beträgt der Winkel, den die Schenkel 15' mit den Abschnitten 11' und dem Jochteil 15" anschließen, 45°. Die Länge des Jochteiles 15" ist so gewählt, daß er sich über mindestens die Hälfte der Breite des Wandteiles 2 erstreckt, wodurch eine ausreichend große Anlagefläche vorhanden ist Der Abstand des Jochteils 15" von der Welle 11 wird durch den Winkel bestimmt, um den der Eimer 1 aus der in Fig. 1 mit strichpunktierter Linie dargestellten Tränklage in die mit ausgezogener Linie dargestellte Nichtgebrauchslage geschwenkt werden muß, in welcher der Saugzapfen 8 nicht mehr über die dem Eimer 1 abgekehrte Seite der Trennwand 5 überstehen darf.

Wie Fig. 1 zeigt, liegt der Bügel 15 in der Tränklage des Eimers 1 an der Wand 5 an oder liegt in dem Zwischenraum zwischen der Trennwand 5 und dem dieser zugekehrten Wandteil 2 des Eimers. Wenn der Eimer aus dieser Tränklage in die Nichtgebrauchslage geschwenkt werden soll. schwenkt die Bedienungsperson den Schwenkarm 13 nach unten, bei einer Blickrichtung gemäß Fig. 1 also im Uhrzeigersinn. Dadurch kommt der Jochteil 15" des Bügels 15 zunächst in Anlage an den Wandteil 2 des Eimers 1 und gleitet dann auf dem Wandteil 2 nach unten gegen die Armatur 7, bis er in Anlage an diese gekommen ist. Dabei wird der Eimer 1 geschwenkt und der Saugzapfen 8 durch die Öffnung 9 hindurch zurückgezogen bis er wie im Ausführungsbeispiel vollständig aus der Öffnung 9 herausgezogen ist. Eine weitere Drehung in gleicher Drehrichtung der Welle 11 über die in Fig. 1 mit ausgezogenen Linien dargestellte Endlage, in welcher der Jochteil 15 in einer lotrecht auf der Trennwand 5 stehenden Ebene liegt, ist nicht möglich. Um den Eimer 1 wieder in die Tränklage zu schwenken, braucht nur der Schwenkarm 13 wieder nach oben in seine Ausgangslage geschwenkt zu werden.

Alle in der vorstehenden Beschreibung erwähnten sowie auch die nur allein aus der Zeichnung entnehmbaren Merkmale sind als weitere Ausgestaltungen Bestandteile der Erfindung auch wenn sie nicht besonders hervorgehoben und insbesondere nicht in den Ansprüchen erwähnt sind.

**Ansprüche**

1. Schwenkvorrichtung für einen im Bereich seines oberen Randes an einer Haltevorrichtung (4) schwenkbar aufhängbaren Eimer (1), der zum Tränken von Tieren, insbesondere von Kälbern oder dgl., einen von seiner Wand nach außen abstehenden Saugzapfen aufweist, **gekennzeichnet** durch eine unterhalb der Haltevorrichtung (4) zumindest annähernd parallel zur Schwenkachse des Eimers (1) drehbar zu lagernde Welle (11, 11′) mit einer Handhabe (13, 14) zum Drehen der Welle (11, 11′) und einem von der Welle (11, 11′) abstehenden Abdrückglied (15, 15′ 15″), das in seiner wirksamen Stellung an der Wand (2) des Eimers (1) anliegt und diese in einer von der Winkelstellung der Welle (11, 11′) abhängigen Schwenklage hält sowie eine Erstreckung in radialer Richtung der Welle (11, 11′) hat, welche zumindest beim größten erreichbaren Schwenkwinkel des Eimers (1) den Saugzapfen (8) außerhalb des von dem zu tränkenden Tier erreichbaren Bereiches hält.

2. Schwenkvorrichtung nach Anspruch 1, dadurch **gekennzeichnet**, daß das Abdrückglied (15, 15′, 15″) aus einem Abschnitt einer die Welle (11, 11′) bildenden Stange besteht.

3. Schwenkvorrichtung nach Anspruch 2. dadurch **gekennzeichnet**, daß das Abdrückglied die Form eines Bügels (15) hat, dessen Jochteil (15″) an die Wand (2) des Eimers (1) anlegbar ist und dessen beide Schenkel (15′) sich an die gegeneinander weisenden sowie miteinander fluchtenden Abschnitte (11′) der Welle (11) anschließen.

4. Schwenkvorrichtung nach Anspruch 3, dadurch **gekennzeichnet,** daß der Jochteil (15″) des Bügels (15) geradlinig und parallel zur Welle (11, 11′) ausgebildet ist und der Abstand der beiden ebenfalls geradlinig ausgebildeten Schenkel voneinander vom Jochteil (15″) zur Welle (11, 11′) hin abnimmt.

5. Schwenkvorrichtung nach Anspruch 4, dadurch **gekennzeichnet,** daß die Lücke zwischen den gegeneinander weisenden und den Bügel (15, 15′, 15″) tragenden Enden der beiden Abschnitte (11′) der Welle (11) schmaler ist als der Durchmesser des Saugzapfens (8).

6. Schwenkvorrichtung nach einem der Ansprüche 1 bis 5, dadurch **gekennzeichnet,** daß als Lager für die Welle (11, 11′) zwei Schellen (12) vorgesehen sind.

7. Schwenkvorrichtung nach einem der Ansprüche 1 bis 6, dadurch **gekennzeichnet,** daß die Handhabe (13, 14) einen im Winkel zur Welle (11, 11′) verlaufenden Schwenkarm (13) aufweist.

8. Schwenkvorrichtung nach Anspruch 7, dadurch **gekennzeichnet,** daß der Schwenkarm (13) durch einen Endabschnitt des die Welle (11, 11′) bildenden Stabes gebildet ist.

Fig.1

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.3) |
|---|---|---|---|
| A | FR-A-1 403 022 (P. GIORDANENGO) * Vollständiges Dokument * --- | 1 | A 01 K 9/00 |
| A | AT-B- 277 652 (H. BECKHOFF) * Figur 1; Seite 2, 1. Absatz * ----- | 1 | |

|  | | | RECHERCHIERTE SACHGEBIETE (Int. Cl.3) |
|---|---|---|---|
| | | | A 01 K 9/00 |

Der vorliegende Recherchenbericht wurde für alle Patentansprüche erstellt

| Recherchenort | Abschlußdatum der Recherche | Prüfer |
|---|---|---|
| BERLIN | 15-09-1988 | WUNDERLICH J E |